# EUROPEAN PATENT SPECIFICATION

(11) **EP 0 696 702 B1**
(45) Date of publication and mention of the grant of the patent: **29.03.2000**
(21) Application number: 94305940.2
(22) Date of filing: 11.08.1994
(51) Int. Cl.: F16M 11/10

(54) **Counterbalancing unit**
Ausgleicheinheit
Ensemble équilibreur

(43) Date of publication of application: 14.02.1996
(73) Proprietor: HEIWA SEIKI KOGYO CO., LTD., Yashio-shi, Saitama (JP)
(72) Inventor: Ishikawa, Masao, c/o Heiwa Seiki Kogyo Co.,Ltd., Yashio-shi, Saitama (JP)
(74) Representative: Leale, Robin George

(56) References cited:
- FR-A- 2 338 453
- FR-A- 2 596 496
- GB-A- 2 049 601
- GB-A- 2 190 703
- US-A- 4 919 376

## Description

The present invention relates to a counterbalancing unit. More particularly, the present invention relates to a counterbalancing unit for a tripod head capable of generating an appropriate amount of restoring force in proportion to a torque created when a tripod head is tilted and thus enabling a photographing device, such as a still camera, a video camera or a movie camera, mounted on the tripod head to tilt stably and smoothly. The invention also relates to such a counterbalancing unit in which the said restoring force may be adjusted corresponding to the weight of a photographing device.

A tripod head has been conventionally used as a device for mounting a photographing device such as a still camera, a video camera or movie camera on a tripod and for permitting a smooth tilting rotation of the photographing device. A counterbalancing means is incorporated in such a tripod head to prevent the photographing device from quickly rotating and falling due to the torque created by the movement of its centre of gravity when it is tilted. Such a counterbalancing means is a means by which a restoring force in proportion to a torque caused by displacement of the center of gravity of the photographing device is generated by an elastic body such as spring. The restoring force prevents the photographing device from falling and thus allows it to be tilted stably and smoothly.

Such a counterbalancing means for a tripod head is disclosed in Japanese publication No. 27560/90 and Japanese Utility Model Publication No. 13037/91, for example. A crank or cam, which rotates eccentrically in accordance with the tilting rotation of the tripod head, is applied to the means described in those publications. However, many elements have to be incorporated in such mechanisms, and therefore the design work is complex. Further, since the mechanism has a complicated structure, it is expensive, and its operation is not always reliable.

It is known from GB-A-2190703 (over which claim 1 has been characterised) to provide a counterbalancing unit for a tripod head with a cylindrical cam that engages against a biased cam surface to generate a restoring force in proportion to the torque created when the tripod head is tilted. A further counterbalancing unit is known from FR-A-2338453.

According to the present invention, there is provided a counterbalancing unit for a tripod head, comprising:
a horizontal axle;
a first holder slidably supported on said horizontal axle and disposed in a housing upstanding from the base of a tripod head;
a compressed elastic body;
at least one guide pin connected with the first holder and movable inwardly of said housing, together with said holder, when said tripod head is tilted; and
a rotary member having a cam face at an edge thereof and fixed to an arm tiltably supported on said housing, said rotary member rotating with said arm and causing said guide pin to move inwardly in said housing by means of said cam face when said tripod head is tilted, so as to further compress said compressed elastic body;
   whereby said counterbalancing unit generates a restoring force in proportion to a torque created when said tripod head is tilted;
   characterised in that the counterbalancing unit further comprises:
a second holder slidably supported on said horizontal axle and disposed in the housing forming a pair of holders with the first holder; and
a plurality of shafts extending through the holders, parallel to the horizontal axle, and being secured to the housing at ends thereof, whereby the holders are permitted to move horizontally along the shafts,
and in that a compressed elastic body is mounted around each of the shafts and supported and compressed between the pair of holders.

Such an arrangement provides a suitable restoring force in proportion to the torque created during tilting rotation of a tripod head, and simplifies the structure of the counterbalancing unit. A photographing device, such as a still camera, a video camera or a movie camera, may thus be tilted stably and smoothly, the counterbalancing unit is manufactured more easily, and the cost of manufacture is reduced.

Some embodiments of the invention will now be described by way of example and with reference to the accompanying drawings, in which:
FIG. 1 is a cross sectional view of a first embodiment of a counterbalancing unit according to the invention;
FIG. 2A, 2B and 2C are a plan view, a cross sectional view, and a side view respectively, of a rotary member of the unit of FIG. 1;
FIG. 3 is a development elevation of a cam face of the rotary member;
FIG. 4 is a cross sectional view of another embodiment of a counterbalancing unit;
FIG. 5 is a cross sectional view of a further embodiment; and
FIG. 6 is a cross sectional view of yet another embodiment.

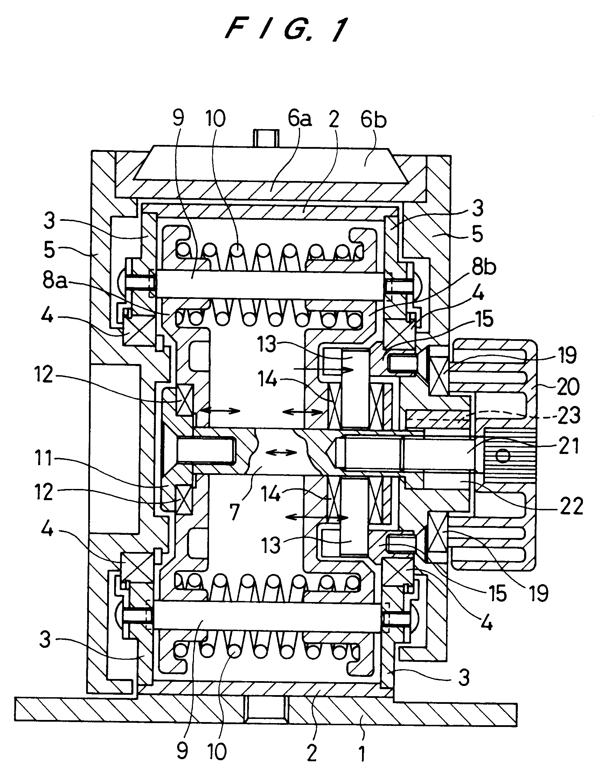

Referring to FIG. 1, a base 1 of a tripod head has secured thereto a housing 2 which extends vertically from the base 1. Side walls 3 of the housing 2 have openings at their centers in which hub members of arms 5 are rotatably mounted through bearings 4. A mount 6a and a mounting plate 6b for mounting a photographing device such as a still camera, a video camera or a movie camera, are fixed to the top portions of the arms 5. Thus the arms 5 can be rotated about a horizontal axis, supported by the side walls 3 of the housing 2. This allows the photographing device to be tilted.

A horizontal axle 7 is disposed in the middle of the tripod head and is coaxial with the central axis around which the arms 5 are tilted. This horizontal axle 7 is arranged to be rotatable and is also movable along its horizontal axis. A pair of right-hand and left-hand holders 8a and 8b are located in the housing 2 and slidable on the horizontal axle 7. A plurality of shafts 9 extend through the holders 8a and 8b, parallel to the axle 7, and are secured to the side walls 3 at their ends. The holders 8a and 8b are thus mounted on the shafts 9. Springs 10 are compressed between the holders 8a and 8b, so as to push the holders apart. The left-hand holder 8a thereby comes into contact with a washer 11 fixed on the left-hand end of the horizontal axle 7, through a bearing 12. There is no particular limitation with regard to the number of the shafts 9 and the springs 10. Their number can be chosen according to the weight of a photographing device to be mounted, for example.

Two guide pins 13, one of which extends upward and the other of which extends downward, are rotatably mounted in the right-hand holder 8b by way of bearings 14. These guide pins 13 are slidable along the longitudinal axle 7 together with the holder 8b. In some cases only one guide pin 13 need be provided, which may extend upward or downward, or indeed horizontally. The number of guide pins 13 may be varied.

A rotary member 15 is fixed on the inside of the right-hand rotary arm 5. The edge of the rotary member 15 presses against the sides of the guide pins 13 under the elastic force of the springs 10 disposed between the holders 8a and 8b. The rotary member 15 thus acts to push the guide pins 13 and the holder 8b inwardly of the arm 5.

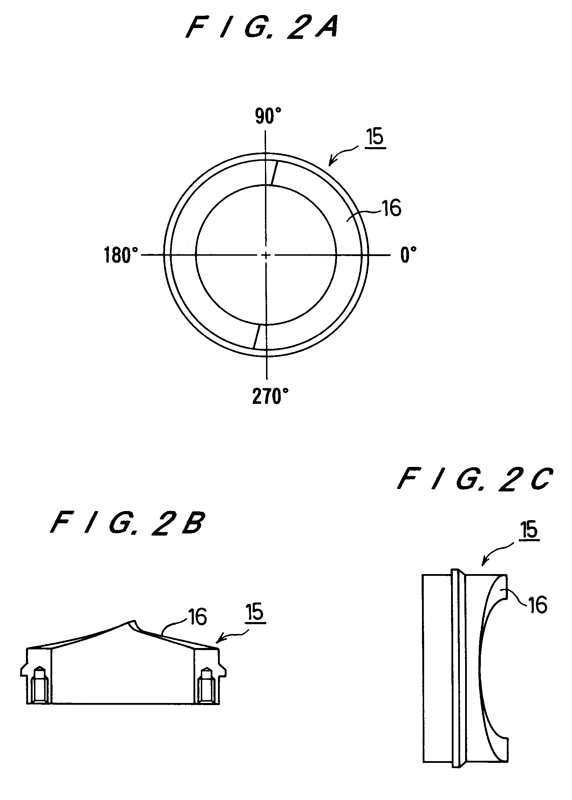

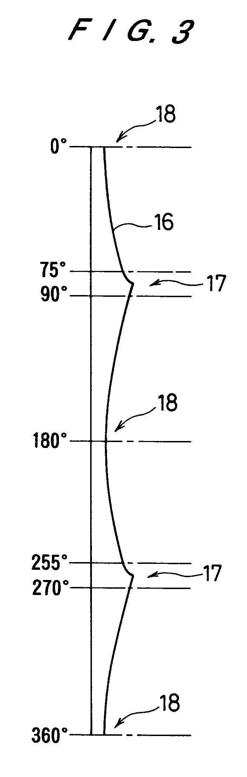

As depicted in FIGs. 2A, 2B and 2C, the rotary member 15 has a cam face 16 on its edge. This cam face 16 is a smoothly curved face, and engages the sides of the guide pins 13. Specifically, as depicted in FIG. 3, the cam face 16 is formed into a curved face with repeated undulations in a cycle of 180 degrees. The undulations allow the tripod head to be tilted within a limited range of tilting rotation, specifically 90 degrees forward and 75 degrees backward. In this embodiment, peak portions 17 are provided corresponding to the extremes of the tilting rotation, and valley portions 18 are interposed between the peak portions 17 corresponding to the less tilted state. These peak and valley portions 17 and 18 are also disposed in cycles of 180 degrees. This permits the cam face 16 engaging the sides of the pins 13 to smoothly transform from a valley portion 18 to a peak portion 17 and thereby cause the guide pins 13 to be moved in the left-hand direction as seen in FIG. 1. Such a cyclic surface permits peak portions 17 and valley portions 18 to be disposed in a rotation symmetry as illustrated in FIG. 2A. In the embodiment of FIG. 1, where the guide pins 13 extend symmetrically upward and downward, the rotary member 15 comes into contact with the respective guide pins 13 and pushes them to move the same distance in a horizontal direction. The shape of the cam face 16 is not limited to that depicted in FIGs. 2 and 3. It can be chosen depending on the location, the number and the desired distance of the movement of the guide pins 13. It is possible, for example, to design the shape of the cam face 16 to correspond to a tilting rotation in the range of 90 degrees both forward and backward.

A knob 20 is rotatably mounted on the outside of the right-hand arm 5 through a bearing 19. The knob 20 is for adjusting the amount of restoring force in proportion to the weight of a photographing device to be mounted. A member 21 having a threaded portion at its tip is connected to the knob 20. A threaded axial bore is formed in the right-hand end of the horizontal axle 7, which is engaged with the threaded member 21. The right-hand end of the horizontal axle 7 is slidable in a keyway 23 in a space 22 formed in the middle of the arm 5. Thus, when the knob 20 is rotated clockwise, the horizontal axle 7 moves axially toward the space 22, i.e. in the right-hand direction of FIG. 1. As a result the left-hand holder 8a is similarly moved to the right by the washer 11, horizontally along the shafts 9. This movement of the holder 8a in the right-hand direction further compresses the springs 10, thereby increasing the elastic force of the springs and generating an increased restoring force when the tripod head is tilted. The restoring force may thus be increased to balance the weight of a photographing device to be mounted on the tripod head. Such an adjustment of the restoring force can be carried out when a photographing device is mounted on the tripod head or when it is not mounted. It may be carried out during a tilting rotation. The operation is simple and easy.

The counterbalancing unit as described above operates as follows.

When a photographing device such as a still camera, a video camera or a movie camera mounted on the camera mount 6a through the mounting plate 6b is tilted, the arms 5 rotate and the rotary member 15 also rotates. The horizontal axle 7 rotates with its washer 11 and the knob 20, according to the rotation of the discs 5. The rotation of the horizontal axle 7 is smooth and has no undesired influence on other members, by virtue of the bearings 12 and 19. The cam face 16 on the edge of the rotary member 15 is in the initial state, in contact with the side of the guide pins 13 at its valley portions 18 but such contact approaches the peak portions 17 in accordance with the tilting rotation, and the guide pins 13 are thereby pushed to the left on the horizontal axle 7. This horizontal movement of the guide pins 13 is accomplished smoothly by virtue of the bearings 14. The right-hand holder 8b is thus moved horizontally to the left along the shafts 9 and the axle 7. These movements of the guide pins 13 and the holder 8b occur integrally. The springs 10 are thus further compressed between the holders 8a and 8b in accordance with the horizontal movement of the holder 8b toward the left, and in accordance with the tilting rotation of the photographing device, and their elastic force is thereby increased. Consequently, the restoring force becomes larger. The further the photographing device is tilted, the larger its torque becomes, because of the movement of its center of gravity. As described in the above, however, the restoring force becomes correspondingly larger so as to balance the increased torque, and thus a counterbalanced state is always maintained, thereby preventing the photographing device from unexpectedly rotating and falling. The restoring force is adjustable to correspond to various weights of photographing devices. When the photographing device is returned in its initial position, the rotary member 15 rotates in the opposite direction to that described above, and the guide pins 13 are thereby allowed to slide back toward the right-hand side of FIG. 1 with their sides remaining in contact with cam face 16. Consequently the elastic force of the springs 10 is gradually decreased, and therefore the restoring force is also decreased. The restoring force thus always corresponds to the state of the tilting rotation and is always in proportion to the torque. Thus a counterbalancing unit for a tripod head according to the present invention generates an appropriate restoring force in proportion to the torque produced during the tilting rotation, so that a photographing device may be tilted stably and smoothly. The structure of the counterbalancing unit is relatively simple so that the tripod head is easily manufactured at a reduced cost.

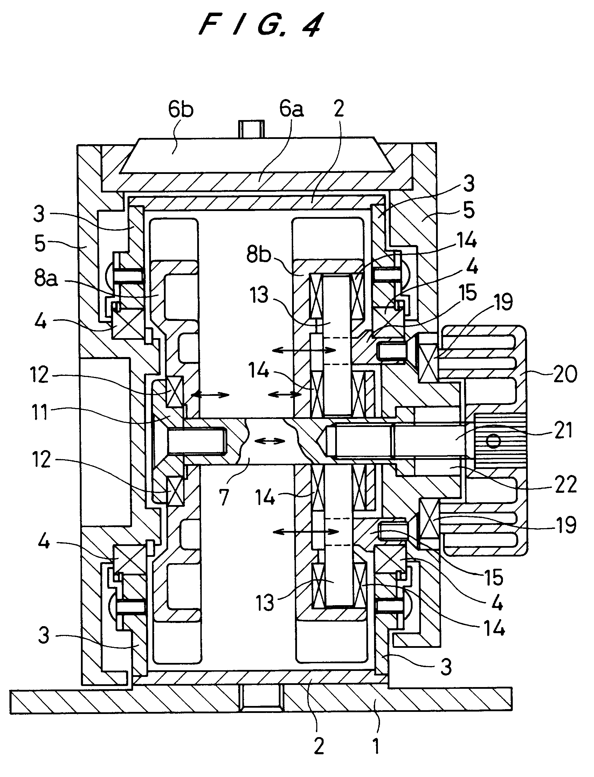

In the embodiment of FIG. 4, guide pins 13 are connected with the right-hand holder 8b at both of their ends by way of bearings 14. This ensures more stable movement of the guide pins. Other than this, this embodiment has a similar structure to that of FIG. 1. Although shafts 9 and springs 10 are not shown in FIG. 4, these members are still provided between the holders 8a and 8b. A keyway 23 is also again provided in the space 22.

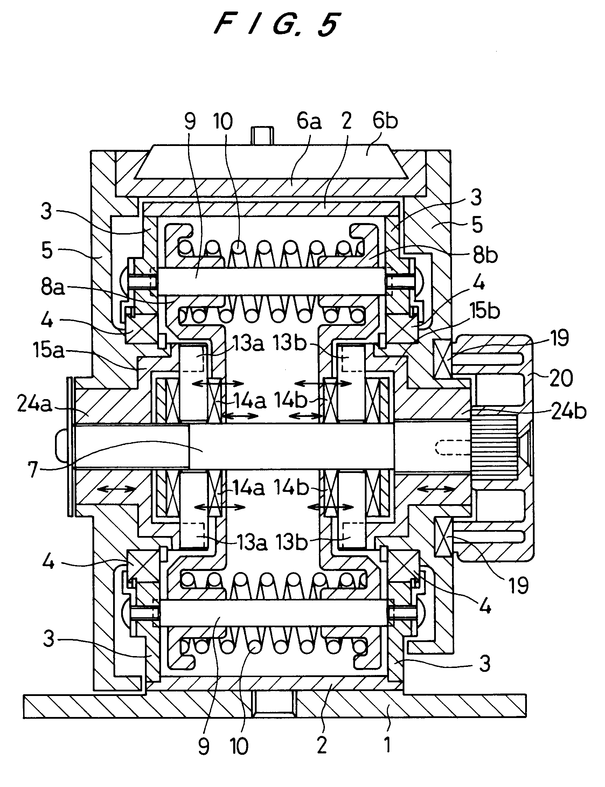

In the embodiment of FIG. 5 a pair of guide pins 13a and 13b is associated with each of the holders 8a and 8b, extending upward and downward as before. Two rotary members 15a and 15b having cam faces at their edges are disposed face to face on the horizontal axle 7, the cam faces again contacting the sides of the guide pins 13a and 13b. These rotary members 15a and 15b are movably connected with tiltable arms 5 and are horizontally movable by rotation of a knob 20. In this embodiment, unlike the embodiments of FIGs. 1 and 4, the horizontal axle 7 cannot move horizontally, but it can still rotate. More specifically, the knob 20 is fixed to the right-hand end of the axle 7, and rotation of the knob 20 thus causes the axle to rotate. First threaded portions 24a and 24b are symmetrically formed on the respective ends of the horizontal axle 7. Second threaded portions (not shown) are formed on the inner surfaces of the rotary members 15a and 15b and are engaged with the first threaded portions 24a and 24b. When the knob 20 is rotated, the horizontal axle 7 rotates, and the rotary members 15a and 15b move lengthwise of the horizontal axle. This movement of the rotary members 15a and 15b causes the holders 8a and 8b to move relatively along shafts 9. The amount of the restoring force is adjustable to correspond to the weight of a photographing device.

The restoring force applied at the time of tilting rotation in the embodiment of FIG. 5, as well as in those of FIGs. 1 and 4, varies depending on the torque, and a counterbalancing state is always maintained. The rotary members 15a and 15b rotate according to the tilting rotation, pushing the guide pins 13a and 13b inwardly, whereby the holders 8a and 8b are moved inward along the shafts 9, and the springs 10 are compressed. On the other hand, when the photographing device is returned to its original position, the rotary members 15a and 15b rotate in the opposite direction, the holders 8a and 8b are pushed apart under the influence of the springs 10, and the guide pins 13a and 13b return to their original positions while keeping in contact with the cam faces of the rotary members 15a and 15b. Concurrently, the elastic force becomes smaller in proportion to decrease of the torque, and thereby, the counterbalancing state is maintained.

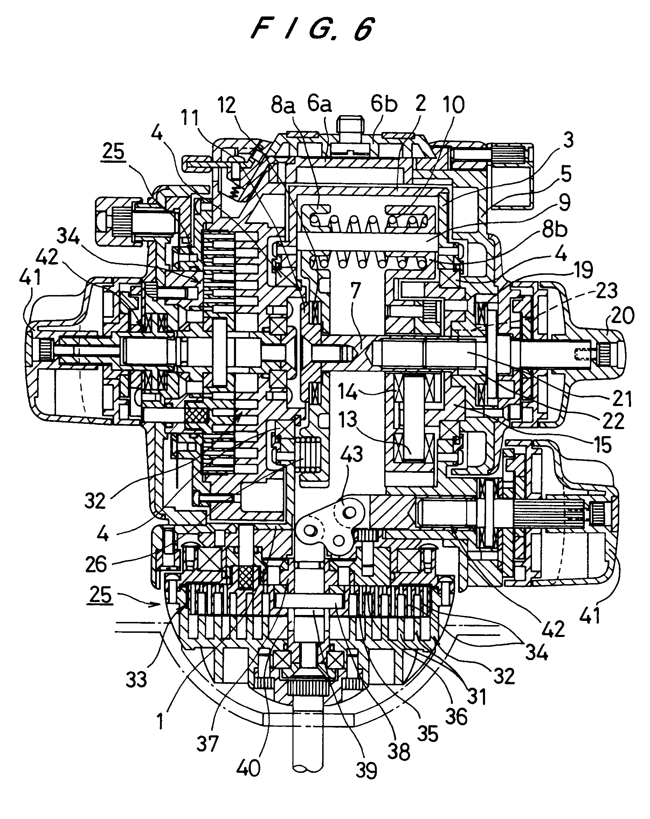

Referring now to FIG. 6, the counterbalancing unit here shown has basically the same structure as that of FIG. 1. However, the left-hand side wall 3 is integrated with the housing 2. In this embodiment, a tripod head includes a counterbalancing unit and brake units 25 which are connected with the left-hand side and the bottom of housing 2, respectively.

In this embodiment, an elastic body in the form of an auxiliary spring 26, distinct from springs 10, is provided between the left-hand holder 8a and a left-hand side of the housing 2 which corresponds to the left-side side wall 3 of FIG. 1. This auxiliary spring 26 is arranged to exert its elastic force to push the holder 8a to the right, namely toward the holder 8b. The auxiliary spring 26 allows a knob 20 to be smoothly operated to adjust the restoring force and also has the function of helping the horizontal axle 7 to move to the right when the restoring force of springs 10 is being caused to increase. Consequently the torque required to rotate the knob 20 is reduced. When the restoring force is being decreased, the auxiliary spring 26 is compressed without preventing the springs 10 from recovering elastically, while any sudden expansion of the springs 10 is prevented. Thus stress on the guide pins 13 and the rotary member 15 is alleviated, and the life span of those members is thereby prolonged. Operational reliability is thus enhanced.

The location of the elastic body 26 is not limited to what is shown in FIG. 6. Such an elastic body may for example be arranged between a holder 8b and a right-hand side wall 3. Neither is there any particular limitation with regard to the number of such elastic bodies. They may be appropriately provided to correspond to the restoring force which is generated during a tilting rotation.

A counterbalancing unit as described above may be combined with a brake unit 25, as shown in FIG. 6, such a combination providing a tripod head having multiple functions.

A brake unit 25 as shown in FIG. 6 is a means for modifying the speed of movement during horizontal panning and tiling rotations of a tripod head. The brake unit 25 provided at the bottom of the housing 2 is for horizontal panning rotation, while the unit 25 on the left-hand side of the housing is for tilting rotation.

A case 32 having a plurality of projections 31 coaxially disposed on its bottom inner surface is provided in the brake unit 25. A braking disc 33 is provided in the case 32 and is movable in the direction of those projections 31. A plurality of projections 34 are coaxially provided on the braking device 33 and are received in the spaces between the projections 31 of the case 32 and between the outermost of such projections and the inner side of the case 32. Through holes 35 and 36 extend through projections 34 and the bottom of the braking disc 33. In the brake unit for horizontal panning rotation, the braking disc 33 is connected so as to rotate according to the rotation of the tripod head. On the other hand, in the brake unit for tilting rotation, the case 32 is so rotatably connected.

The case 32 is sealed, and viscous fluid such as grease is filled in an inner sealed space of the case. As a result, when the braking disc 33 or the case 32 is rotated in accordance with a horizontal panning or tiling rotation, a viscous resistance is generated to exert a braking force against the rotation of the tripod head.

The braking disc 33 slides along a supporting shaft 37 in these brake units 25. The position of braking disc 33 in the case 32 is adjusted to modify the braking force. More specifically, the braking force becomes large when the projections 34 of the braking disc 33 are further engaged with the projections 31 of the case 32. On the other hand, the less the engagement of these projections 31 and 34 becomes, the smaller is the braking force. These changes in the engagement between projections 31 and 34 are effected by sliding movement of the braking disc 33. During such movement of the braking disc, the viscous fluid filled in the case 32 flows through the holes 35 and 36 and thus does not impede such movement.

In addition, the braking disc 33 is connected with a sliding shaft 39 through a pin 38. Elongate holes 40 through which the pin 38 extends are formed in a hollow supporting shaft 37, and the sliding shaft 39 is thus slidable within the range of the length of the elongate holes 40 along the inner surface of the supporting shaft 37. The sliding shaft 39 supports the braking disc 33 through the pin 38 during its sliding movement. Further, the sliding shaft 39 is connected with an operating knob 41 disposed in the front of the tripod head, via a transmission mechanism 42. The braking force is adjusted by rotating the operating knob 41.

Specifically, a threaded portion is provided with the transmission mechanism 42, through which rotation of the operating knob 41 is transmitted to the sliding shaft 39 to move the tip of the sliding shaft 39 forward and backward. With regard to the movement of the tip of the sliding shaft 39, the structure of the transmission mechanism 42 is slightly different as between one for horizontal panning rotation and one for tilting rotation. In a braking means for horizontal panning rotation, a brake operating plate 42 rotatable in a vertical plane is provided and transforms horizontal sliding movement of the threaded portion into vertical movement of the sliding shaft 39. This is because it is not possible to connect the threaded portion with the tip of the sliding shaft 39 directly in the brake unit for horizontal panning rotation. On the other hand, the threaded portion of the transmission mechanism 42 is directly connected with the tip of the sliding shaft 39 in the brake unit for tilting operation.

The combination of such a brake unit 25 and the counterbalancing unit greatly improves operability of the tripod head.

## Claims

1. A counterbalancing unit for a tripod head, comprising:
a horizontal axle (7);
a first holder (8b) slidably supported on said horizontal axle and disposed in a housing (2,3) upstanding from the base (1) of a tripod head;
a compressed elastic body (10);
at least one guide pin (13) connected with the first holder and movable inwardly of said housing, together with said holder, when said tripod head is tilted; and
a rotary member (15) having a cam face (16) at an edge thereof and fixed to an arm (5) tiltably supported on said housing, said rotary member rotating with said arm and causing said guide pin to move inwardly in said housing by means of said cam face when said tripod head is tilted, so as to further compress said compressed elastic body;
whereby said counterbalancing unit generates a restoring force in proportion to a torque created when said tripod head is tilted;
characterised in that the counterbalancing unit further comprises:
a second holder (8a) slidably supported on said horizontal axle (7) and disposed in the housing (2,3) forming a pair of holders (8a,8b) with the first holder (8b); and
a plurality of shafts (9) extending through the holders, parallel to the horizontal axle, and being secured to the housing (3) at ends thereof, whereby the holders are permitted to move horizontally along the shafts,
and in that a compressed elastic body (10) is mounted around each of the shafts and supported and compressed between the pair of holders.

2. A counterbalancing unit as claimed in claim 1, further comprising:
a knob (20) for adjusting an elastic force of the compressed elastic bodies (10), having a threaded member (21), and rotatably mounted in front of said arm (5);
a threaded hole being formed in one end of said horizontal axle (7) and receiving said threaded member;
whereby rotation of said knob and said threaded member causes the horizontal axle to move in a horizontal direction.

3. A counterbalancing unit as claimed in claim 2, wherein said second holder (8a), which is not provided with a guide pin (13), is mounted on the end of said horizontal axle (7) opposite to the end having said threaded hole;
rotation of said knob (20) causing the said compressed elastic body (10) to be further compressed between the said holders.

4. A counterbalancing unit as claimed in claim 1, further comprising:
a knob (20) for adjusting the elastic force of said compressed elastic body (10), mounted in front of said arm, said knob being secured on said horizontal axle (7) to cause the said axle to rotate therewith,
a first threaded portion (24a,24b) formed on an outer peripheral surface of an end of said horizontal axle; and
a second threaded portion formed on an inner peripheral surface of said rotary member (15a,15b) and engaged with said first threaded portion,
whereby rotation of said knob causes said rotary member to move horizontally.

5. A counterbalancing unit as claimed in any preceding claim, further comprising at least one auxiliary elastic body (26) provided between said housing (2,3) and at least one of said holders (8a), said auxiliary elastic body causing said holder to be pushed inwardly of the said housing.

## Patentansprüche

1. Ausgleichseinheit für einen Dreibeinkopf mit:
- einer horizontalen Achse (7);
- einem ersten Halter (8b), der verschiebbar auf der horizontalen Achse gehaltert ist und in einem Gehäuse (2, 3), welches von der Basis (1) des Dreibeinkopfes hochsteht, vorgesehen ist;
- einem komprimierten elastischen Körper (10);
- wenigstens einem Führungsstift (13), der mit dem ersten Halter verbunden ist und zusammen mit dem Halter bezüglich des Gehäuses nach innen bzw. innerhalb des Gehäuses bewegbar ist, wenn der Dreibeinkopf geneigt wird; und
- einem Drehelement (15), das eine Nockenfläche (16) an einer Kante aufweist und an einem Arm (5) fixiert ist, welcher kippbar auf dem Gehäuse gehaltert ist, wobei das Drehelement sich mit dem Arm dreht und bewirkt, daß der Führungsstift sich in dem Gehäuse mittels der Nockenfläche nach innen bewegt, wenn der Dreibeinkopf gekippt wird, so daß der komprimierte elastische Körper weiter komprimiert wird;
wobei die Ausgleichseinheit eine Rückstellkraft proportional zu einem beim Kippen des Dreibeinkopfes erzeugten Drehmoment generiert;
**dadurch gekennzeichnet,**
daß die Ausgleichseinheit ferner aufweist:
- einen zweiten Halter (8a), welcher verschiebbar auf der horizontalen Achse (7) gehaltert ist und in dem Gehäuse (2, 3) vorgesehen ist, welcher zusammen mit dem ersten Halter (8b) ein Paar von Haltern (8a, 8b) bildet; und
- eine Anzahl von Schaften bzw. Wellen (9), welche sich durch die Halter parallel zu der horizontalen Achse erstrecken und an dem Gehäuse (3) an dessen Enden gesichert sind, wodurch den Haltern eine horizontale Bewegung entlang der Schafte gestattet ist,
und daß ein komprimierter elastischer Körper (10) um jeden der Schafte herum angebracht ist und zwischen dem Paar von Haltern gehaltert und komprimiert ist.

2. Ausgleichseinheit nach Anspruch 1, ferner mit:
- einem Knopf (20) zur Einstellung einer elastischen Kraft auf die komprimierten elastischen Körper (10), welcher ein mit Gewinde ausgebildetes Element (21) aufweist und drehbar vor dem Arm (5) angebracht ist;
- ein Gewindeloch, welches in einem Ende der horizontalen Achse (7) gebildet ist und das mit Gewinde ausgebildete Element aufnimmt;
- wodurch eine Drehung des Knopfes und des mit Gewinde ausgebildeten Elements eine Bewegung der horizontalen Achse in einer horizontalen Richtung bewirkt.

3. Ausgleichselement nach Anspruch 2, bei welchem der zweite Halter (8a), welcher nicht mit einem Führungsstift (13) ausgebildet ist, auf dem Ende der horizontalen Achse gegenüber dem mit dem Gewindeloch ausgebildeten Ende angebracht ist; wobei eine Drehung des Knopfes (20) eine weitere Komprimierung des komprimierten elastischen Körpers (10) zwischen den Haltern bewirkt.

4. Ausgleichseinheit nach Anspruch 1, ferner mit:
- einem Knopf (20) zur Einstellung der elastischen Kraft des komprimierten elastischen Körpers (10), welcher vor dem Arm angebracht ist, wobei der Knopf auf der horizontalen Achse (7) angebracht ist, um eine Drehung der Achse mit ihm zu bewirken;
- einem ersten Gewindeabschnitt (24a, 24b), welcher auf einer äußeren peripheren Fläche eines Endes der horizontalen Achse gebildet ist; und
- einem zweiten Gewindeabschnitt, der auf einer inneren peripheren Oberfläche des Drehelements (15a, 15b) gebildet ist und mit dem ersten Gewindeabschnitt im Eingriff ist,
wodurch eine Drehung des Knopfes eine horizontale Bewegung des Drehelements bewirkt.

5. Ausgleichseinheit nach einem der vorstehenden Ansprüche, ferner mit wenigstens einem elastischen Hilfskörper (26), der zwischen dem Gehäuse (2, 3) und wenigstens einem der Halter (8a) vorgesehen ist, wobei der elastische Hilfskörper eine Verschiebung des Halters innerhalb bzw. nach innen bezüglich des Gehäuses bewirkt.

## Revendications

1. Unité de compensation pour tête de trépied, comportant :
un axe horizontal (7) ;
un premier élément de maintien (8b) supporté d'une manière coulissante sur ledit axe horizontal et disposé dans un boîtier (2, 3) s'étendant verticalement à partir de la base (1) d'une tête de trépied ;
un corps élastique comprimé (10) ;
au moins une tige de guidage (13) reliée au premier élément de maintien et pouvant se déplacer vers l'intérieur dudit boîtier, en association avec ledit élément de maintien, lorsque ladite tête de trépied est inclinée ; et
un élément rotatif (15) ayant une face de came (16) au niveau d'un bord de celui-ci et fixé à un bras (5) supporté d'une manière inclinable sur ledit boîtier, ledit élément rotatif tournant avec ledit bras et amenant ladite tige de guidage à se déplacer vers l'intérieur dans ledit boîtier par l'intermédiaire de ladite face de came lorsque ladite tête de trépied est inclinée, de manière à comprimer davantage ledit corps élastique comprimé ;
ladite unité de compensation générant une force de rappel proportionnelle à un couple créé lorsque ladite tête de trépied est inclinée ;
caractérisée en ce que l'unité de compensation comporte en outre :
un second élément de maintien (8a) supporté d'une manière coulissante sur ledit axe horizontal (7) et disposé à l'intérieur du boîtier (2, 3) en formant une paire d'éléments de maintien (8a, 8b) avec le premier élément de maintien (8b) ; et
une pluralité d'arbres (9) s'étendant à travers les éléments de maintien, parallèlement à l'axe horizontal, et étant fixés au boîtier (3) au niveau de ses extrémités, les éléments de maintien pouvant se déplacer horizontalement le long des arbres,
et en ce qu'un corps élastique comprimé (10) est monté autour de chacun des arbres et est supporté et comprimé entre la paire d'éléments de maintien.

2. Unité de compensation selon la revendication 1, comportant en outre :
un bouton (20) pour ajuster une force élastique des corps élastiques (10) comprimés, ayant un élément fileté (21), et monté de manière à pouvoir tourner à l'avant dudit bras (5) ;
un trou fileté étant formé au niveau d'une première extrémité dudit axe horizontal (7) et recevant ledit élément fileté ;
dans laquelle la rotation dudit bouton et dudit élément fileté provoque le déplacement de l'axe horizontal dans une direction horizontale.

3. Unité de compensation selon la revendication 2, dans laquelle ledit second élément de maintien (8a), qui ne comporte pas de tige de guidage (13), est monté sur l'extrémité dudit axe horizontal (7) en vis-à-vis de l'extrémité comportant ledit trou fileté ;
la rotation dudit bouton (20) amenant ledit corps élastique (10) comprimé à être davantage comprimé entre lesdits éléments de maintien.

4. Unité de compensation selon la revendication 1, comportant en outre :
un bouton (20) pour ajuster la force élastique dudit corps élastique (10) comprimé, monté à l'avant dudit bras, ledit bouton étant fixé sur ledit axe horizontal (7) de manière à faire tourner avec lui ledit axe,
une première partie filetée (24a, 24b) formée sur une surface périphérique extérieure d'une extrémité dudit axe horizontal ; et
une seconde partie filetée formée sur une surface périphérique intérieure dudit élément rotatif (15a, 15b) et venant en prise avec ladite première partie filetée,
la rotation dudit bouton amenant ledit élément rotatif à se déplacer horizontalement.

5. Unité de compensation selon l'une quelconque des revendications précédentes, comportant en outre au moins un corps élastique auxiliaire (26) agencé entre ledit boîtier (2, 3) et au moins l'un desdits éléments de maintien (8a), ledit corps élastique auxiliaire amenant ledit élément de maintien à être repoussé vers l'intérieur dudit boîtier.
